# EUROPÄISCHE PATENTANMELDUNG

(11) **EP 1 946 839 A2**
(43) Veröffentlichungstag der Anmeldung: **23.07.2008**
(21) Anmeldenummer: 08000079.7
(22) Anmeldetag: 04.01.2008
(51) Int. Cl.: B01J 31/22, B01J 27/26

(54) **Doppelmetallcyanid-Katalysatoren für die Herstellung von Polyetherpolyolen**

(30) Priorität: 17.01.2007 DE 102007002555
(71) Anmelder: Bayer MaterialScience AG, 51368 Leverkusen (DE)
(72) Erfinder: Hofmann, Jörg, Dr., 47829 Krefeld (DE)

(57) **Zusammenfassung**

Die Erfindung betrifft neuartige Doppelmetallcyanid(DMC)-Katalysatoren für die Herstellung von Polyetherpolyolen durch Polyaddition von Alkylenoxiden an aktive Wasserstoffatome aufweisende Starterverbindungen.

## Beschreibung

Die Erfindung betrifft neuartige Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe z.B. US-A 3404109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wässrige Lösung eines Metallsalzes mit der wässrigen Lösung eines Metallcyanidsalzes in Gegenwart eines organischen Komplexliganden, z.B. eines Ethers, umsetzt. In einer typischen Katalysatorpräparation werden beispielsweise wässrige Lösungen von Zinkchlorid (im Überschuss) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ • x ZnCl₂ • yH₂O • z Glyme

erhalten (siehe z.B. EP-A 700 949).

Aus JP-A 4 145 123, US-A 5 470 813, EP-A 700 949, EP-A 743 093, EP-A 761 708 und WO 97/40086 sind DMC-Katalysatoren bekannt, die durch Einsatz von tert.-Butanol als organischem Komplexliganden (allein oder in Kombination mit einem Polyether (EP-A 700 949, EP-A 761 708, WO 97/40086)) den Anteil an monofunktionellen Polyethern mit endständigen Doppelbindungen bei der Herstellung von Polyetherpolyolen weiter reduzieren. Allerdings liegt der Doppelbindungsgehalt der Polyetherpolyole, die durch diese verbesserten DMC-Katalysatoren erhalten werden, weiterhin bei Werten von mindestens 3 mMol/kg (siehe z.B. EP-A 700 949, EP-A 761 708, WO 97/40086). Durch den Einsatz dieser DMC-Katalysatoren wird darüber hinaus die Induktionszeit bei der Polyadditionsreaktion der Alkylenoxide mit entsprechenden Starterverbindungen reduziert und die Katalysatoraktivität erhöht. Dennoch tritt auch bei diesen DMC-Katalysatoren immer noch eine Induktionsperiode auf. Diese Induktionsperiode ist aus produktionstechnischer Sicht grundsätzlich unerwünscht, da sie zu einer Reduktion der Raum-Zeit-Ausbeute führt, und es außerdem bei Aktivierung des Katalysators zu einer starken Wärmefreisetzung und damit einem unkontrollierten Temperaturanstieg kommen kann, was eine erhöhte thermische Belastung des Polyetherpolyols und eine Beeinträchtigung des Produktqualität nach sich ziehen kann. Zudem besteht die Gefahr, dass die Katalysatoraktivität durch beschleunigte thermische Alterung beeinträchtigt wird.

In Dalton Trans., 2006, 5390-5395 wird die Homo- und Copolymerisation von Propylenoxid durch Katalyse mit Cobalttetracyanonickelat (Co[Ni(CN)₄]) beschrieben. Allerdings tritt auch bei Verwendung dieses neuen DMC-Katalysators die unerwünschte Induktionsperiode auf und der Doppelbindungsgehalt der erhaltenen Polyetherpolyole ist weiterhin hoch.

Es wurde jetzt gefunden, dass DMC-Katalysatoren, die neben einer DMC-Verbindung der allgemeinen Formel M[M'(CN)₄] einen oder mehrere organische Komplexliganden enthalten, bei der Herstellung von Polyetherpolyolen keine Induktionsperiode mehr aufweisen, und dass die durch Einsatz dieser DMC-Katalysatoren erhaltenen Polyetherpolyole extrem niedrige Doppelbindungsgehalte besitzen.

Gegenstand der vorliegenden Erfindung sind daher Doppelmetallcyanid (DMC)-Katalysatoren, enthaltend
a) eine oder mehrere, vorzugsweise eine Doppelmetallcyanid-Verbindung der allgemeinen Formel M[M'(CN)₄],
   wobei
   M ausgewählt wird aus den Metallen Zn (II), Fe (II), Ni (II), Mn (II), Co (II), Sn (II),
   Pb (II), Sr (II), Cu (II), Cd (II), Hg (II), Pd (II), Pt (II), V (II), Mg (II), Ca (II) und Ba (II), und
   M' ausgewählt wird aus den Metallen Zn (II), Fe (II), Ni (II), Mn (II), Co (II),
   Sn (II), Pb (II), Sr (II), Cu (II), Cd (II), Hg (II), Pd (II), Pt (II), V (II), Mg (II), Ca (II) und Ba (II),
b) einen oder mehrere organischen Komplexliganden, ausgewählt aus der Gruppe der Alkohole, Aldehyde, Ketone, Ether, Ester, Amide, Harnstoffe, Nitrile und Sulfide, und optional
c) eine oder mehrere, von b) verschiedene komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester und ionischen oberflächen- bzw. grenzflächenaktiven Verbindungen.

In den erfindungsgemäßen Katalysatoren können gegebenenfalls d) Wasser, vorzugsweise 1 bis 10 Gew.-% und/oder e) eines oder mehrere wasserlösliche Metallsalze, vorzugsweise 5 bis 25 Gew.-%, der Formel (I) M(X)ₙ aus der Herstellung der Doppelmetallcyanidverbindungen a) enthalten sein. In Formel (I) wird M ausgewählt aus den Metallen Zn (II), Fe (II), Ni (II), Mn (II), Co (II), Sn (II), Pb (II), Sr (II), Cu (II), Cd (II), Hg (II), Pd (II), Pt (II), V (II), Mg (II), Ca (II) und Ba (II). Besonders bevorzugt sind Zn (II), Fe (II), Co (II) und Ni (II). X sind gleiche oder verschiedene, vorzugsweise gleiche Anionen, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1 oder 2.

Die in den erfindungsgemäßen Katalysatoren enthaltenen Doppelmetallcyanid-Verbindungen a) können durch Reaktion wasserlöslicher Metallsalze und wasserlöslicher Metallcyanidsalze erhalten werden. Anstelle der wasserlöslichen Metallcyanidsalze können auch die entsprechenden Säuren eingesetzt werden, die sich beispielsweise durch Ionenaustausch aus den Metallsalzen erhalten lassen.
Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Sr (II), Cu (II), Cd (II), Hg (II), Pd (II), Pt (II), V (II), Mg (II), Ca (II) und Ba (II). Besonders bevorzugt sind Zn (II), Fe (II), Co (II) und Ni (II). Die Anionen X sind gleich oder verschieden, vorzugsweise gleich und werden bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1 oder 2.

Beispiele geeigneter wasserlöslicher Metallsalze sind Zink(II)chlorid, Zink(II)bromid, Zink(II)acetat, Zink(II)acetylacetonat, Zink(II)benzoat, Zink(II)nitrat, Eisen(II)sulfat, Eisen(II)bromid, Eisen(II)chlorid, Cobalt(II)chlorid, Cobalt(II)sulfat, Cobalt(II)thiocyanat, Cobalt(II)nitrat, Nickel(II)chlorid, Nickel(II)sulfat und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)₄, wobei M' ausgewählt wird aus den Metallen Zn (II), Fe (II), Ni (II), Mn (II), Co (II), Sn (II), Pb (II), Sr (II), Cu (II), Cd (II), Hg (II), Pd (II), Pt (II), V (II), Mg (II), Ca (II) und Ba (II). Besonders bevorzugt wird M' ausgewählt aus den Metallen Co(II), Fe(II), Ni(II), Zn(II), Pd(II) und Pt(II). Das wasserlösliche Metallcyanidsalz kann eines oder mehrere dieser Metalle enthalten. Die Kationen Y sind gleich oder verschieden, vorzugsweise gleich, und werden ausgewählt aus der die Alkalimetallionen und Erdalkalimetallionen umfassenden Gruppe. Der Wert für a ist 1 oder 2. Beispiele geeigneter wasserlöslicher Metallcyanidsalze sind Kaliumtetracyanonickelat(II), Kaliumtetracyanopalladat(II) und Kaliumtetracyanoplatinat(II).

Beispiele geeigneter Doppelmetallcyanid-Verbindungen a) der allgemeinen Formel M[M'(CN)₄], die in den erfindungsgemäßen Katalysatoren enthalten sind, sind Zink(II)-tetracyanonickelat(II), Cobalt(II)tetracyanonickelat(II), Cobalt(II)tetracyanopalladat(II) und Cobalt(II)tetracyanoplatinat(II). Besonders bevorzugt verwendet wird Cobalt(II)tetracyanonickelat(II).

Die in den erfindungsgemäßen DMC-Katalysatoren enthaltenen organischen Komplexliganden b) sind im Prinzip bekannt und ausführlich im Stand der Technik beschrieben (beispielsweise in US-A 5 158 922, US-A 3 404 109, US-A 3 829 505, US-A 3 941 849, EP-A 700 949, EP-A 761 708, JP-A 4 145 123, US-A 5 470 813, EP-A 743 093, WO 97/40086, WO 00/02951 und EP-A 1 529 566). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können.

Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind aliphatische Ether, wie Dimethoxyethan, und wasserlösliche aliphatische Alkohole, wie Ethanol, Isopropanol, n-Butanol, iso-Butanol, sek.-Butanol, tert.-Butanol, 2-Methyl-3-buten-2-ol und 2-Methyl-3-butin-2-ol. Bevorzugt sind auch organische Komplexliganden, die sowohl aliphatische Ethergruppen als auch aliphatische Hydroxylgruppen enthalten, z.B. Ethylenglykol-mono-tert.-butylether, Diethylenglykol-mono-tert.-butylether und Tripropylenglykol-mono-methylether. Besonders bevorzugt sind Dimethoxyethan, tert.-Butanol 2-Methyl-3-buten-2-ol, 2-Methyl-3-butin-2-ol und Ethylenglykol-mono-tert.-butylether.

Der organische Komplexligand b) wird entweder während der Katalysatorpräparation zugegeben oder unmittelbar nach der Ausfällung der Doppelmetallcyanidverbindung a). Gewöhnlich wird der organische Komplexligand im Überschuß eingesetzt.

Die erfindungsgemäßen DMC-Katalysatoren enthalten die Doppelmetallcyanid-Verbindungen a) in Mengen von 20 bis 90 Gew.-%, bevorzugt 25 bis 80 Gew.-%, bezogen auf die Menge des fertigen Katalysators, und die organischen Komplexliganden b) in Mengen von 0,5 bis 30 Gew.-%, bevorzugt 1 bis 25 Gew.-%, bezogen auf die Menge des fertigen Katalysators. Optional enthalten die erfindungsgemäßen DMC-Katalysatoren daneben 1 bis 80 Gew.-%, bevorzugt 1 bis 40 Gew.-%, bezogen auf die Menge des fertigen Katalysators, einer oder mehrerer, von b) verschiedener komplexbildender Komponenten aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionischen oberflächen- bzw. grenzflächenaktiven Verbindungen. Bevorzugte Katalysatoren enthalten als Komponente c) Polyether, insbesondere Polyetherpolyole.

Die erfindungsgemäßen Katalysatoren können kristallin, teilkristallin oder amorph sein. Die Analyse der Kristallinität erfolgt üblicherweise durch Pulverröntgendiffraktometrie.

Besonders bevorzugte erfindungsgemäße Katalysatoren enthalten
a) Cobalt(II)tetracyanonickelat(II),
b) tert.-Butanol,
   und optional
c) eine oder mehrere komplexbildende Komponente(n) der vorgenannten Art, insbesondere Polyetherpolyole, ganz besonders solche mit einem zahlenmittleren Molekulargewicht von 500 bis 4000 g/mol.

Die Herstellung der erfindungsgemäßen DMC-Katalysatoren erfolgt üblicherweise in wässriger Lösung durch Umsetzung von Metallsalzen, insbesondere der Formel (I), mit Metallcyanidsalzen, insbesondere der Formel (II), in Gegenwart von organischen Komplexliganden b), und optional weiteren komplexbildenden Komponenten c).

Bevorzugt werden dabei zunächst die wässrigen Lösungen des Metallsalzes (z.B. Cobalt(II)-sulfat, eingesetzt im stöchiometrischen Überschuss von mindestens 50 Mol-%, bezogen auf das Metallcyanidsalz) und des Metallcyanidsalzes (z.B. Kaliumtetracyanonickelat) in Gegenwart des organischen Komplexliganden b) (z.B. tert.-Butanol) umgesetzt, wobei sich eine Suspension bildet, die die Doppelmetallcyanid-Verbindung a) (z.B. Cobalt(II)tetracyanonickelat(II)), Wasser d), überschüssiges Metallsalz e), und den organischen Komplexliganden b) enthält.

Der organische Komplexligand b) kann dabei in der wässrigen Lösung des Metallsalzes und/oder des Metallcyanidsalzes vorhanden sein, oder er wird der nach Ausfällung der Doppelmetallcyanid-Verbindung a) erhaltenen Suspension unmittelbar zugegeben. Bevorzugt ist die Variante, bei der der organische Komplexligand b) bereits in der wässrigen Lösung des Metallsalzes und/oder des Metallcyanidsalzes vorhanden ist. Es hat sich als vorteilhaft erwiesen, die wässrigen Lösungen und den organischen Komplexliganden b) unter starkem Rühren zu vermischen. Optional wird die gebildete Suspension anschließend mit einem oder mehreren komplexbildenden Komponenten c) behandelt. Die komplexbildenden Komponenten c) werden dabei bevorzugt in einer Mischung mit Wasser und organischem Komplexliganden b) eingesetzt.

Anschließend erfolgt die Isolierung des Katalysators aus der Suspension durch bekannte Techniken, wie Zentrifugation oder Filtration. In einer bevorzugten Ausführungsvariante wird der isolierte Katalysator anschließend mit einer wässrigen Lösung des organischen Komplexliganden b) gewaschen (z.B. durch Resuspendieren und anschließende erneute Isolierung durch Filtration oder Zentrifugation, oder durch ein Verfahren der Filterkuchenwäsche, wie es in WO 01/80994 beschrieben ist). Auf diese Weise können Restmengen wasserlöslicher Nebenprodukte aus dem erfindungsgemäßen Katalysator entfernt werden.

Bevorzugt beträgt die Menge des organischen Komplexliganden b) in der wässrigen Waschlösung 40 bis 80 Gew.-%, bezogen auf die Gesamtlösung. Der wässrigen Waschlösung wird optional eine kleine Menge der komplexbildenden Komponente c) zugefügt, bevorzugt 0,5 bis 5 Gew.-%, bezogen auf die Gesamtlösung.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nichtwässrige Lösungen zu verwenden, z.B. aus organischen Komplexliganden b) oder einer Mischung aus organischen Komplexliganden b) und komplexbildenden Komponenten c).

Der gewaschene Katalysator wird anschließend, gegebenenfalls nach Pulverisierung, bei Temperaturen von im allgemeinen 20 bis 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", Band A21, 1992, S. 670f zu entnehmen.

Zusätzlich können auch Monomere, die sich in Gegenwart der erfindungsgemäßen Katalysatoren mit den Alkylenoxiden copolymerisieren lassen, eingesetzt werden. Beipiele für solche Comonomere sind Oxetane, Anhydride, Lactone, Lactid oder Kohlendioxid.

Als aktive Wasserstoffatome aufweisende Starterverbindungen werden vorzugsweise Verbindungen mit (zahlenmittleren) Molekulargewichten von 18 bis 2 000 und 1 bis 8 Hydroxylgruppen eingesetzt. Beispiele sind Ethylenglykol, Diethylenglykol, Triethylenglykol, 1,2-Propylenglykol, Dipropylenglykol, 1,4-Butandiol, Hexamethylenglykol, Bisphenol A, Bisphenol F, Trimethylolpropan, Glycerin, Ricinusöl, Pentaerythrit, Sorbit, Rohrzucker, abgebaute Stärke oder Wasser.

Vorteilhaft werden auch solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit (zahlenmittleren) Molekulargewichten von 200 bis 2 000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,0001 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, dass unter den gegebenen Reaktionsbedingungen eine gute Beherrschung der Polyadditionsreaktion möglich ist. Die Katalysatorkonzentration beträgt im allgemeinen 0,0005 Gew.-% bis 1 Gew.-%, bevorzugt 0,001 Gew.-% bis 0,2 Gew.-%, bezogen auf die Menge des herzustellenden Polyetherpolyols.

Die (zahlenmittleren) Molekulargewichte der nach dem erfindungsgemäßen Verfahren hergestellten Polyetherpolyole betragen 500 bis 100.000 g/mol, bevorzugt 1 000 bis 50 000 g/mol, besonders bevorzugt 2 000 bis 20 000 g/mol.

Die Polyaddition kann kontinuierlich oder diskontinuierlich, z.B. in einem Batch- oder im Semibatchverfahren durchgeführt werden.

Die erfindungsgemäßen DMC-Katalysatoren weisen im Vergleich zu den DMC-Katalysatoren des Standes der Technik bei der Herstellung von Polyetherpolyolen keine Induktionsperiode auf. Außerdem werden durch Einsatz dieser DMC-Katalysatoren Polyetherpolyole erhalten, die extrem niedrige Doppelbindungsgehalte besitzen. Bevorzugte erfindungsgemäße Polyetherpolyole weisen Doppelbindungsgehalte von höchstens 2 mMol/kg, besonders bevorzugt weniger als 1 mMol/kg auf, selbst bei Molmassen vom 1000 g/mol und mehr, bevorzugt auch bei Molmassen von mindestens 2000 g/mol. Polyetherpolyole mit derart niedrigen Doppelbindungsgehalten waren bislang nicht bekannt.

### Beispiele

### Katalysatorpräparation

### Beispiel A

### DMC-Katalysator enthaltend Co[Ni(CN)₄] und tert.-Butanol

Zu einer Lösung aus 2,9 g (12 mmol) Kaliumtetracyanonickelat in 75 ml destilliertem Wasser gab man unter starkem Rühren (24 000 U/min) eine Lösung aus 11,1 g (48,8 mmol) Cobalt(II)sulfat-heptahydrat in 15 ml destilliertem Wasser. Unmittelbar danach wurde eine Mischung aus 50 g tert.-Butanol und 50 g destilliertem Wasser zur gebildeten Suspension gegeben und anschließend 10 min stark gerührt (24 000 U/min). Der Feststoff wurde durch Filtration isoliert, dann 10 min mit einer Mischung aus 87,5 g tert.-Butanol und 37,5 g destilliertem Wasser gerührt (10 000 U/min) und erneut filtriert. Dieser Waschvorgang wurde noch zweimal wiederholt. Nach der letzten Filtration wurde der Katalysator bei 50°C und Normaldruck bis zur Gewichtskonstanz getrocknet.
Ausbeute an getrocknetem, pulverförmigem Katalysator: 1,3g
Elementaranalyse: Cobalt = 25,4 Gew.-%, Nickel = 24,5 Gew.-%

### Beispiel B

### DMC-Katalysator enthaltend Co[Ni(CN)₄] und tert.-Butanol sowie Polypropylenglykol PPG 2000 als zusätzliche komplexbildender Komponente

Zu einer Lösung aus 2,5 g (10,4 mmol) Kaliumtetracyanonickelat in 61 ml destilliertem Wasser gab man unter starkem Rühren (24 000 U/min) eine Lösung aus 12,1 g (53,0 mmol) Cobalt(II)sulfat-heptahydrat in 17 ml destilliertem Wasser. Unmittelbar danach wurde eine Mischung aus 43,5 g tert.-Butanol und 43,5 g destilliertem Wasser zur gebildeten Suspension gegeben und anschließend 10 min stark gerührt (24 000 U/min). Dann wurde eine Mischung aus 0,9 g tert.-Butanol, 0,9 g PPG 2000 (Desmophen^{®} 3600 Z, Bayer MaterialScience AG) und 87 g destilliertem Wasser zugegeben und 3 min bei 1 000 U/min gerührt. Der Feststoff wurde durch Filtration isoliert, dann 10 min mit einer Mischung aus 60,9 g tert.-Butanol, 0,9 g PPG 2000 und 26,1 g destilliertem Wasser gerührt (10 000 U/min) und erneut filtriert. Anschließend wurde noch einmal 10 min mit einer Mischung aus 87 g tert.-Butanol und 0,4 g PPG 2000 gerührt (10 000 U/min) und erneut filtriert. Nach der letzten Filtration wird der Katalysator bei 60°C 2 Stunden im Hochvakuum getrocknet.
Ausbeute an getrocknetem, pulverförmigem Katalysator: 1,8 g
Elementaranalyse: Cobalt = 25,5 Gew.-%, Nickel = 22,4 Gew.-%

### Beispiel C

### DMC-Katalysator enthaltend Co[Ni(CN)₄] und tert.-Butanol

Zu einer Lösung aus 2,4 g (10,0 mmol) Kaliumtetracyanonickelat in 60 ml destilliertem Wasser und 8,4 g tert.-Butanol gab man unter starkem Rühren (24 000 U/min) eine Lösung aus 15,2 g (66,6 mmol) Cobalt(II)sulfat-heptahydrat in 16 ml destilliertem Wasser. Danach wurde die gebildete Suspension 10 min stark gerührt (24 000 U/min). Der Feststoff wurde durch Filtration isoliert, dann 10 min mit einer Mischung aus 21,6 g tert.-Butanol und 10,8 g destilliertem Wasser gerührt (10 000 U/min) und erneut filtriert. Anschließend wurde noch einmal 10 min mit 31,2 g tert.-Butanol gerührt (10 000 U/min) und erneut filtriert. Nach der letzten Filtration wurde der Katalysator bei 60°C 2 Stunden im Hochvakuum getrocknet.
Ausbeute an getrocknetem, pulverförmigem Katalysator: 1,7 g
Elementaranalyse: Cobalt = 25,9 Gew.-%, Nickel = 20,7 Gew.-%

### Beispiel D

### DMC-Katalysator enthaltend Co[Ni(CN)₄] und tert.-Butanol sowie Polypropylenglykol PPG 1000 als zusätzliche komplexbildender Komponente

Zu einer Lösung aus 2,4 g (10,0 mmol) Kaliumtetracyanonickelat in 25 ml destilliertem Wasser gab man unter starkem Rühren (10 000 U/min) eine Lösung aus 37,3 g (163,3 mmol) Cobalt(II)sulfat-heptahydrat in 74 g destilliertem Wasser und 11 g tert.-Butanol. Anschliessend wurde die gebildete Suspension 10 min stark gerührt (24 000 U/min). Dann wurde eine Mischung aus 0,4 g tert.-Butanol, 2,1 g PPG 1000 (Desmophen^{®} 1110 BD, Bayer MaterialScience AG) und 12,3 g destilliertem Wasser zugegeben und 3 min bei 10 000 U/min gerührt. Der Feststoff wurde durch Filtration isoliert, dann 10 min mit einer Mischung aus 27,3 g tert.-Butanol, 0,5 g PPG 1000 und 14,2 g destilliertem Wasser gerührt (10 000 U/min) und erneut filtriert. Anschließend wurde noch einmal 10 min mit einer Mischung aus 39 g tert.-Butanol und 0,3 g PPG 1000 gerührt (10 000 U/min) und erneut filtriert. Nach der letzten Filtration wurde der Katalysator bei 60°C 2 Stunden im Hochvakuum getrocknet.
Ausbeute an getrocknetem, pulverförmigem Katalysator: 2,0 g
Elementaranalyse: Cobalt = 26,2 Gew.-%, Nickel = 17,9 Gew.-%

### Beispiel E (Vergleich)

DMC-Katalysator enthaltend Co[Ni(CN)₄] ohne organischen Komplexligand (analog zu Dalton Trans., 2006, 5390-5395)

Zu einer Lösung aus 5,5 g (23 mmol) Kaliumtetracyanonickelat in 95 ml destilliertem Wasser gab man unter starkem Rühren (24 000 U/min) eine Lösung aus 6,5 g (23 mmol) Cobalt(II)sulfat-heptahydrat in 94 ml destilliertem Wasser. Unmittelbar danach wurden 100 g destilliertes Wasser zur gebildeten Suspension gegeben und es wurde anschließend 1 h stark gerührt (24 000 U/min). Der Feststoff wurde durch Filtration isoliert und der Katalysator dann bei 60°C 10 h im Hochvakuum getrocknet.
Ausbeute an getrocknetem, pulverförmigem Katalysator: 2,0 g

### Herstellung von Polyetherpolyolen

### Allgemeine Durchführung

In einem 500 ml Druckreaktor wurden 50 g Polypropylenglykol-Starter (zahlenmittleres Molekulargewicht = 1 000 g/mol) und 200 mg Katalysator unter Schutzgas (Stickstoff) vorgelegt und unter Rühren auf 105°C aufgeheizt. Anschließend wurde Propylenoxid (ca. 10 g) auf einmal zudosiert, bis der Gesamtdruck auf 3,5 bar angestiegen war. Weiteres Propylenoxid wurde erst dann wieder zudosiert, wenn ein beschleunigter Druckabfall im Reaktor beobachtet wurde. Dieser beschleunigte Druckabfall zeigt an, dass der Katalysator aktiviert ist. Anschließend wurde das restliche Propylenoxid (140 g) kontinuierlich bei einem konstanten Gesamtdruck von 2,5 bar zudosiert. Nach vollständiger Propylenoxid-Dosierung und 1 Stunde Nachreaktionszeit bei 105°C wurden flüchtige Anteile bei 90°C (1 mbar) abdestilliert und die Reaktionsmischung wurde anschließend auf Raumtemperatur abgekühlt.

Die erhaltenen Polyetherpolyole wurden durch Ermittlung der OH-Zahlen und der Doppelbindungsgehalte charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung. Die Gesamtreaktionszeit ist die Summe aus Induktions- und Propoxylierungszeit.

### Beispiel 1

### Herstellung von Polyetherpolyol mit Katalysator A

| | | |
|---|---|---|
| Induktionszeit: | | 0 min |
| Propoxylierungszeit: | | 46 min |
| Gesamtreaktionszeit: | | 46 min |
| Polyetherpolyol: | OH-Zahl (mg KOH/g): | 29,9 |
| | Doppelbindungsgehalt (mMol/kg): | 2 |

### Beispiel 2

### Herstellung von Polyetherpolyol mit Katalysator B

| | | |
|---|---|---|
| Induktionszeit: | | 0 min |
| Propoxylierungszeit: | | 38 min |
| Gesamtreaktionszeit: | | 38 min |
| Polyetherpolyol: | OH-Zahl (mg KOH/g): | 29,4 |
| | Doppelbindungsgehalt (mMol/kg): | 0 |

### Beispiel 3

### Herstellung von Polyetherpolyol mit Katalysator C

| | | |
|---|---|---|
| Induktionszeit: | | 0 min |
| Propoxylierungszeit: | | 41 min |
| Gesamtreaktionszeit: | | 41 min |
| Polyetherpolyol: | OH-Zahl (mg KOH/g): | 29,8 |
| | Doppelbindungsgehalt (mMol/kg): | 1 |

### Beispiel 4

### Herstellung von Polyetherpolyol mit Katalysator D

| | | |
|---|---|---|
| Induktionszeit: | | 0 min |
| Propoxylierungszeit: | | 20 min |
| Gesamtreaktionszeit: | | 20 min |
| Polyetherpolyol: | OH-Zahl (mg KOH/g): | 29,8 |
| | Doppelbindungsgehalt (mMol/kg): | 0 |

### Beispiel 5 (Vergleich)

### Herstellung von Polyetherpolyol mit Katalysator E (Vergleich)

| | | |
|---|---|---|
| Induktionszeit: | | 31 min |
| Propoxylierungszeit: | | 360 min |
| Gesamtreaktionszeit: | | 391 min |
| Polyetherpolyol: | OH-Zahl (mg KOH/g): | 31,2 |
| | Doppelbindungsgehalt (mMol/kg): | 12 |

Ein Vergleich von Beispiel 1-4 mit Beispiel 5 (Vergleich) zeigt, dass die neuen, erfindungsgemäßen DMC-Katalysatoren bei der Herstellung von Polyetherpolyolen keine Induktionsperiode mehr aufweisen. Außerdem werden durch Einsatz dieser DMC-Katalysatoren Polyetherpolyole erhalten, die extrem niedrige Doppelbindungsgehalte besitzen.

## Patentansprüche

1. Doppelmetallcyanid (DMC)-Katalysator enthaltend
a) eine oder mehrere, vorzugsweise eine Doppelmetallcyanid-Verbindung der allgemeinen Formel M[M'(CN)₄],
wobei
M ausgewählt wird aus den Metallen Zn (II), Fe (II), Ni (II), Mn (II), Co (II), Sn (II), Pb (II), Sr (II), Cu (II), Cd (II), Hg (II), Pd (II), Pt (II), V (II), Mg (II), Ca (II) und Ba (II), und
M' ausgewählt wird aus den Metallen Zn (II), Fe (II), Ni (II), Mn (II), Co (II), Sn (II), Pb (II), Sr (II), Cu (II), Cd (II), Hg (II), Pd (II), Pt (II), V (II), Mg (II), Ca (II) und Ba (II),
b) einen oder mehrere organischen Komplexliganden, ausgewählt aus der Gruppe der Alkohole, Aldehyde, Ketone, Ether, Ester, Amide, Harnstoffe, Nitrile und Sulfide,
und optional
c) eine oder mehrere, von b) verschiedene komplexbildende Komponente(n) aus den Verbindungsklassen der Polyether, Polyester, Polycarbonate, Polyalkylenglykolsorbitanester, Polyalkylenglykolglycidylether, Polyacrylamid, Poly-(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose, Polyacetale, Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester und ionischen oberflächen- bzw. grenzflächenaktiven Verbindungen.

2. DMC-Katalysator nach Anspruch 1, zusätzlich enthaltend d) Wasser und/oder e) wasserlösliches Metallsalz.

3. DMC-Katalysator nach Anspruch 1 oder 2, worin die Doppelmetallcyanid-Verbindung Cobalt(II)tetracyanonickelat(II) ist.

4. DMC-Katalysator nach einem der Ansprüche 1 bis 3, worin der organische Komplexligand tert.-Butanol ist.

5. DMC-Katalysator nach einem der Ansprüche 1 bis 4, worin der Katalysator als komplexbildende Komponente c) 1 bis 80 Gew.-% eines Polyethers enthält.

6. Verfahren zur Herstellung von Polyetherpolyolen durch Polyaddition von Alkylenoxiden an aktive Wasserstoffatome aufweisende Starterverbindungen, in Gegenwart eines oder mehrerer DMC-Katalysatoren nach einem der Ansprüche 1 bis 5.

7. Verwendung eines oder mehrerer DMC-Katalysatoren nach einem der Ansprüche 1 bis 5 zur Herstellung von Polyetherpolyolen durch Polyaddition von Alkylenoxiden an aktive Wasserstoffatome aufweisende Starterverbindungen.

8. Polyetherpolyol, herstellbar nach dem Verfahren gemäß Anspruch 6.

9. Polyetherpolyol, hergestellt durch Polyaddition von Alkylenoxiden an aktive Wasserstoffatome aufweisende Starterverbindungen, **dadurch gekennzeichnet, dass** der Doppelbindungsgehalt höchstens 2 mMol/kg beträgt.

10. Polyetherpolyol gemäß Anspruch 9 mit einem Doppelbindungsgehalt von weniger als 1 mMol/kg.
